# EUROPEAN PATENT APPLICATION

(11) **EP 4 714 823 A1**
(43) Date of publication of application: **25.03.2026**
(21) Application number: 25194809.7
(22) Date of filing: 08.08.2025
(51) Int. Cl.: B64C 3/50, B64C 9/02, B64C 13/30

(54) **ACTUATION SYSTEM FOR ACTUATING A CONTROL SURFACE OF AN AIRCRAFT, ASSOCIATED CONTROL SURFACE ASSEMBLY, AIRCRAFT AND ACTUATION METHOD**

(30) Priority: 18.09.2024 DE 102024126857
(71) Applicant: AIRBUS Operations GmbH, 21129 Hamburg (DE)
(72) Inventor: Schlipf, Bernhard, 21129 Hamburg (DE); Daandels, Dort, 21129 Hamburg (DE)
(74) Representative: Airbus Germany

(57) **Abstract**

This actuation system (22) comprises:
- an actuation device (26), comprising a first end (30) configured to be connected to a main portion (18) and a second end (32) configured to be connected to a control surface (20), and
- at least one hinging device (28) comprising at least one hinging member (34) and being configured for guiding a movement of the control surface (20) relative to the main portion (18),

wherein the actuation device (26) is configured to move its first (30) and second ends (32) in translation along an actuator axis (A-A'),
wherein the hinging device (28) defines a plurality of hinging axes (H-H') intersecting to define a pivot axis (P-P'), the pivot axis (P-P') being offset to the hinging device (28), the hinging device (28) being configured for guiding the movement of the control surface (20) in rotation around the pivot axis (P-P').

## Description

The present disclosure relates to an actuation system for actuating a control surface of an aircraft. This disclosure also related to a control surface assembly comprising such an actuation system for actuating a control surface of an aircraft. The present disclosure further relates to an aircraft comprising such a control surface assembly and to an actuation method being implemented by such an actuation system.

In the domain of actuation of control surfaces of aircraft, one knows for example using translational actuators in order to move control surfaces relative to a main portion of the aircraft. For example, such actuators are generally connected to both the control surface and the main portion of the aircraft. In particular, in such examples, the control surface is generally hinged in rotation relatively to the main portion of the aircraft around a pin of a hinge defining a rotation axis. The control surface comprises a lug acting as a lever arm lever arm, being offset of such a rotation axis. The actuator is then connected to such a lug such that the translational movement provided by the actuator to the lug is converted to a rotational movement of the control surface around the rotation axis provided by the hinge.

Such actuation systems for actuating a control surface of an aircraft are however not entirely satisfying. In particular, the loads applied on control surfaces can be significant, and in order for the actuator to actuate the control surface as required, it is necessary to have a bulky actuator and/or a long enough lever arm. Such bulky actuators and/or long lever arms are however complicated to integrate and due to their size, can lead to reduced performance of the aircraft.

An aim of the invention is thus to provide an actuation system for actuating a control surface of an aircraft, which is compact and easy to integrate in an aircraft while being able to withstand high load from the control surface.

To that end, the invention relates to an actuation system for actuating a control surface of an aircraft, comprising:
- an actuation device, comprising a first end configured to be connected to a main portion of the aircraft and a second end configured to be connected to the control surface of the aircraft, the actuation device being configured for actuating said control surface relative to the main portion, and
- at least one hinging device, configured to connect the control surface to the main portion, the hinging device comprising at least one hinging member and being configured for guiding a movement of the control surface relative to the main portion,

wherein the actuation device is a translational actuator configured to move its first and second ends relatively in translation along an actuator axis,
wherein the hinging device defines a plurality of hinging axes, the plurality of hinging axes intersecting to define a pivot axis, the pivot axis being offset to the hinging device, the hinging device being configured for guiding the movement of the control surface in rotation around the pivot axis.

The use of a hinging device which is guiding the movement of the control surface in rotation around a pivot axis defined by a plurality of hinging axes and being offset to the hinging device is especially relevant since this allows to have a long enough lever arm without any integration difficulties. This allows having a compact and easy to integrate actuation system which is able to withstand high load from the control surface.

According to other advantageous aspects of the invention, the actuation system for actuating a control surface of an aircraft comprises one or more of the following features taken alone or according to all technically possible combinations:
- the hinging member comprises a first hinging element and a second hinging element, the first hinging element being configured to be articulated to the main portion around a first hinging axis, the second hinging element being configured to be articulated to the control surface around a second hinging axis, the first and second hinging elements being articulated around an intermediate hinging axis;
- the actuation system is such that:
   - the first hinging element comprises a first crenelated portion, configured to be nested into a complementary crenelated portion of the main portion; and/or
   - the second hinging element comprises a second crenelated portion, configured to be nested into a complementary crenelated portion of the control surface; and/or
   - both the first hinging element and the second hinging element comprise intermediate crenelated connection portions, the intermediate crenelated portions of the first and second hinging elements being nested into each other;
- the first hinging axis passes through the first crenelated portion; and/or the second hinging axis passes through the second crenelated portion; and/or
   the intermediate hinging axis passes through the intermediate crenelated portions of the first and second hinging elements;
- the hinging member comprises a flexure hinge, the flexure hinge being configured to bend between the main portion and the control surface to define at least one of the axis of the plurality of hinging axes;
- the flexure hinge has a substantially trapezoidal shape, the edge defined by a first leg of said trapezoidal shape being connected to the main portion and the edge defined by a second leg of said trapezoidal shape, being connected to the control surface;
- the hinging device comprises a plurality of hinging members; and
- the actuation system comprises a plurality of hinging devices, each hinging device of said plurality of hinging devices being configured for guiding the movement of the control surface in rotation around a same pivot axis.

The invention also relates to a control surface assembly comprising a main portion of an aircraft, a control surface of said aircraft and an actuation system as presented above.

According to other advantageous control surface assembly comprises one or more of the following features taken alone or according to all technically possible combinations:
- the main portion and the control surface of the aircraft define together an internal volume, the pivot axis extending outside of the internal volume;
- a rotation angle range of the control surface relative to the main portion is comprised between +25° and -25°, wherein an angle of 0° corresponds to a position wherein the control surface and the main portion are substantially aligned;
- the control surface assembly comprises at least one sealing element fastened to one of the main portion and control surface and abutting the other of the main portion and control surface; and
- the control surface defines an effective chord length between the second end of the actuation device and a trailing edge of the control surface, the hinging device defining a lever arm between the pivot axis and the actuator axis, a ratio of the lever arm over the effective chord length being comprised between 12% and 50%.

The invention further relates to an aircraft comprising a control surface assembly as presented above.

The invention also relates to an actuation method for moving a control surface relative to a main portion of an aircraft, the actuation method being implemented by an actuation system as presented above, wherein the actuation method comprises the following steps:
- actuating the actuation device of the actuation system to move the first and second ends of the actuation device along the actuator axis; and
- guiding the movement of the control surface relative to the main portion by the at least one hinging device of the actuation system, the hinging device guiding the movement of the control surface in rotation around the pivot axis of the actuation system.

The invention will be better understood when reading the following description, which is given solely by way of example and with reference to the appended drawings, in which:
- Figure 1 is a schematic view of an aircraft comprising a control surface assembly which comprises an actuation system for actuating a control surface according to the invention;
- Figure 2 is a schematic sectional view of the control surface assembly illustrated on figure 1;
- Figure 3 is a schematic perspective view of an example of a control surface assembly;
- Figure 4 is a view similar to figure 3, of another example of a control surface assembly;
- Figure 5 is a schematic sectional view similar to the view of figure 2, showing details of another example of a hinging device;
- Figure 6 is a schematic sectional view similar to the view of figure, showing details of yet another example of a hinging device; and

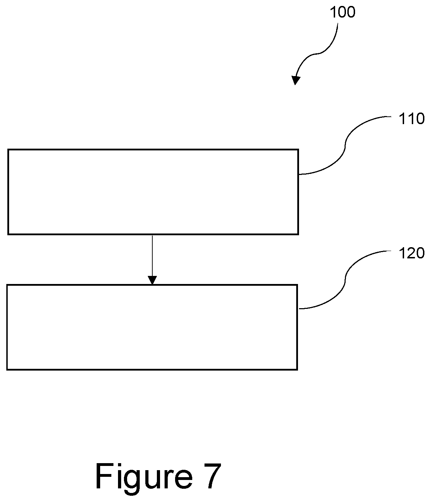

- Figure 7 is a flow chart presenting the steps of an actuation method implemented by an actuation system as presented in the figures 1 to 6.

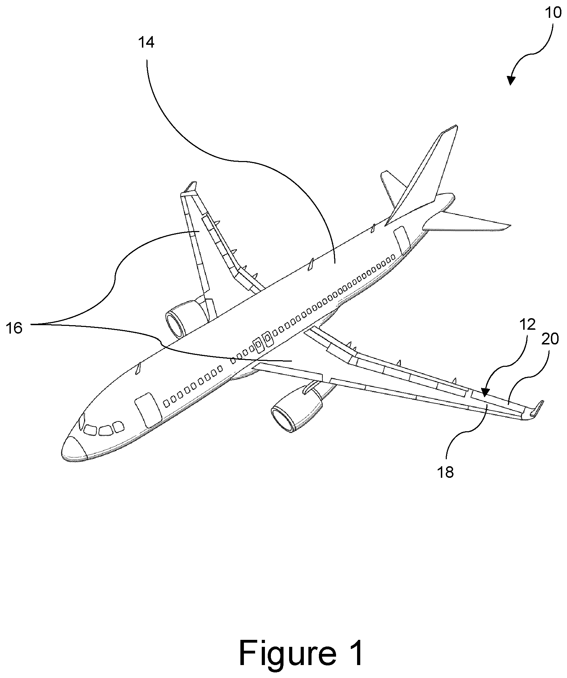

As illustrated in figure 1, an aircraft 10 comprises a control surface assembly 12.

The aircraft 10 is for example an airplane and for example an airliner. As visible from figure 1, the aircraft 10 comprises a fuselage 14 and wings 16.

In the example presented on figure 1, the control surface assembly 12 is arranged on one of the wings 16. In other examples, the control surface assembly 12 is arranged on other parts of the aircraft 10 such as for example on a vertical or horizontal tail plane.

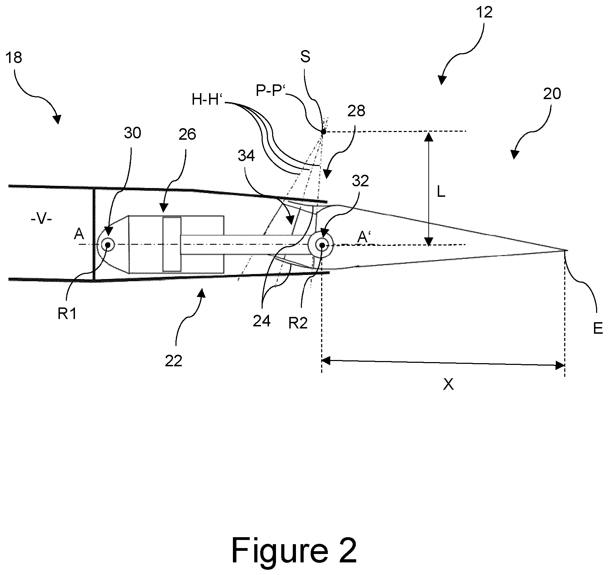

As illustrated from figures 2 to 6, the control surface assembly 12 comprises a main portion 18, a control surface 20 and an actuation system 22. Furthermore, the control surface assembly 12 comprises for example at least one sealing element 24.

The main portion 18 is for example a fixed body of the wing 18, that is a portion of the wing 18 that is not moveable relative to the rest of the aircraft 10, such as for example relative to the fuselage 14.

In another example, the main portion is a fixed body of a vertical tail plane (VTP) or a horizontal tail plane (HTP), that is a portion of such VTP or HTP that is not moveable relative to the rest of the aircraft 10, such as for example relative to the fuselage 14.

In yet another example, the main portion 18 is a moveable portion of the aircraft 10 such as for example a flap, an aileron, a rudder or an elevator. In such an example, and as this will be presented in more detail later, the control surface 20 is a surface moveable relative to such a moveable portion of the aircraft 10.

The control surface 20 is a surface that is moveable relative to the rest of the aircraft 10, such as for example relative to the fuselage 14 and/or the wings 16. The control surface is for example chosen from the list consisting of: flap, slat, aileron, rudder, and elevator.

When the main portion 18 is a moveable portion of the aircraft 10, the moveable surface 20 is for example a tab associated to such a moveable portion.

As illustrated on figures 1 to 6, the main portion 18 is for example a fixed body of one of the wings 16 of the aircraft 10 and the moveable surface 20 is for example an aileron of such a wing 16.

As illustrated in figure 2, the moveable surface 20 comprises a trailing edge E. The trailing edge E is for example extending opposite the main portion 18.

The sealing element 24 is fastened to one of the main portion 18 and control surface 20 and is abutting the other of the main portion 18 and control surface 20. The sealing element 24 is for example flexible to ensure abutting said other of the main portion 18 and control surface 20 independently of the position of the control surface 20 relative to the main portion 18. The sealing element 24 is for example configure for sliding on said other of the main portion 18 and control surface 20 when the control surface 20 is moved relative to the main portion 18, and for bending to ensure that the sealing element 24 is constantly abutting said other of the main portion 18 and control surface 20.

In the example of figure 2, the control surface assembly 12 comprises two sealing elements 24, each sealing element being fastened to the control surface 20 and abutting the main portion 18.

As visible from figures 2 to 6, the main portion 18 and the control surface 20, and for example the sealing element 24, define together an internal volume V. Such internal volume V corresponds for example to an internal volume defined by a wing 16 which comprises the main portion 18 and the control surface 20, and for example the sealing element 24.

The actuation system 22 is configured for actuating the control surface 20 of the aircraft 10. In other words, the actuation system is configured for moving the control surface 20 relative to the main portion 18 of the aircraft 10.

As this will be presented in more details later, the actuation system 22 is configured for moving the control surface 20 in rotation relative to main portion 18.

A rotation range of the control surface 20 relative to the main portion 18 is for example comprised between +25° and -25°. It is understood that a relative angle of 0° corresponds to a position in which the control surface and the main portion are substantially aligned. In particular, and for example, each of the main portion 18 and control surface 20 defines a chord direction (non-illustrated for clarity purposes), the relative angle between the main portion 18 and control surface 20 being equal to 0° when the direction of both the main portion 18 and control surface 20 are parallel. A relative angle between the chord direction of the main portion 18 and control surface 20 is then for example comprised between +25° and -25°.

The actuation system 22 is for example configured for moving the control surface 20 in rotation within the rotation range.

The actuation system 22 comprises an actuation device 26 and a least one hinging device 28.

For example, the actuation system comprises one or a plurality of actuation devices 26 and/or one or a plurality of hinging devices 28.

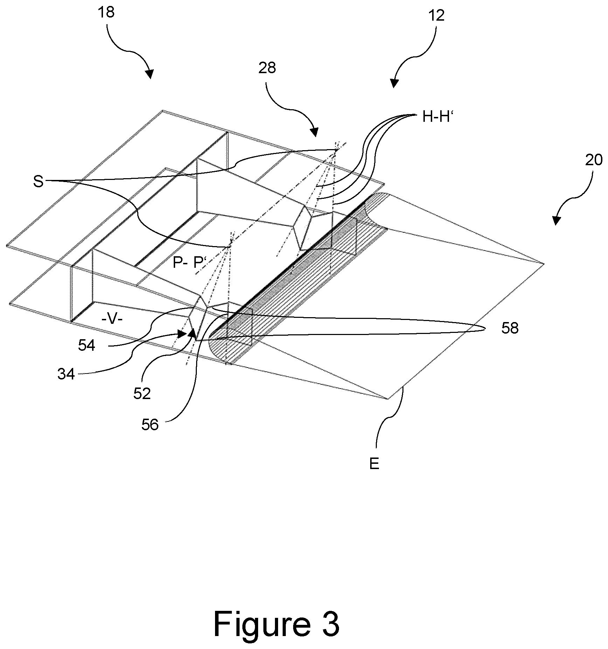

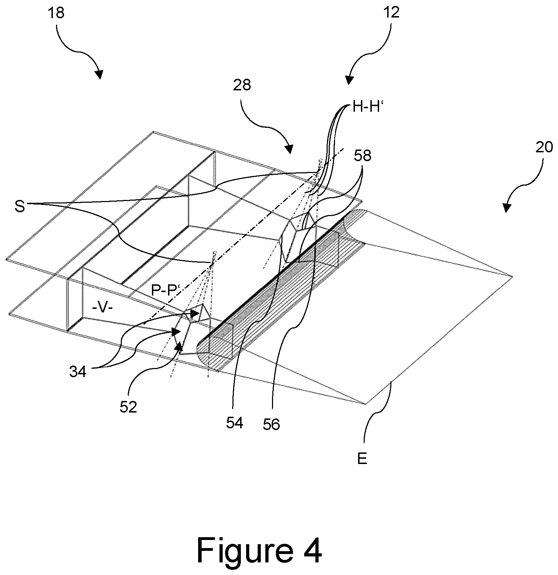

In the example of figure 3 and 4, the actuation system 22 comprises two hinging devices 28.

In illustration of figure 2, the actuation system 22 comprises one actuation device 26.

As illustrated in figure 2, the actuation device 26 comprises a first end 30, connected to the main portion 18 of the aircraft 10 and a second end 32, connected to the control surface 20 of the aircraft 10.

The actuation device 26 is configured for actuating, or in other words moving, the control surface 20 relative to the main portion 18.

In particular, as for example visible from figure 2, the actuation device 26 is a translational actuator, configured to move its first end 30 and second end 32 in translation along an actuator axis A-A'. The actuation device 26 is not illustrated from figures 3 to 6 for clarity purposes.

One understand that a translational actuator is here defined as an actuator configured to move its first end 30 and second end 32 in translation along an actuator axis A-A'. Thus, under such an interpretation of the term translational actuator, a translational actuator could comprise a rotational actuation element, as long as the actuator provides a translational movement of the first end 30 relative to the second end 32 along a translation axis A-A'.

As this will be presented in more details later, the actuator axis A-A' is for example configured to move and/or rotate relatively to the main portion 18 and/or to the control surface 20 when control surface 20 is actuated relatively to the main portion 18. For example, the actuator axis A-A' is rotated relatively to the main portion 18 when the control surface 20 is actuated relatively to the main portion 18. In other words, the actuation device 26 is configured for moving its first 30 and second ends 32 in translation along the actuator axis A-A' in the referential of the actuator, but the actuator axis A-A' may rotate in the referential of the control surface 20 and/or main portion 18 when the control surface 20 is actuated.

In particular, and as for example illustrated in figure 2, the first end 30 of the actuation device 32 is configured to be moveable in rotation relatively to the main portion 18 of the aircraft around a first rotation axis R1 and the second end 32 of the actuation device R2 is configured to be moveable in rotation relatively to the control surface 20 around a second rotation axis R2.

As visible from figure 2, the first R1 and second R2 rotation axis are parallel. Furthermore, as visible from figure 2, the first R1 and second R2 rotation axis are both substantially parallel to the pivot axis P-P' which will be introduced and presented in more details later on.

As illustrated from figure 2, the control surface 20 defines an effective chord length X between the second end 32 of the actuation device 26 and the trailing edge E.

As illustrated from figures 2 to 6, the at least one hinging device 28 is connecting the control surface 20 to the main portion 18.

The hinging device 28 is configured for guiding the movement of the control surface 20 relative to the main portion 18. In particular, the hinging device 28 is configured for guiding movements of the control surface 20 relative to the main portion 18 which result from actuation of the actuation device 26.

The hinging device 28 comprises at least one hinging member 34. Each hinging member 34 is for example connecting the control surface 20 to the main portion 18 and configured for guiding the movement of the control surface 20 relative to the main portion 18.

In the example of figure 3, each hinging device 28 comprises one hinging member 34. In the example of figure 4, each hinging device 28 comprises two hinging members 34, the hinging members 34 of such a device being for example symmetrical one relative to the other. In other non-illustrated examples, each hinging device 28 comprises more than two hinging members 34,

As visible from figures 2 to 6, the hinging device 28 defines a plurality of hinging axes H-H'. In particular, as this will be presented in more details, the hinging device 28 is articulated and/or deformable around each hinging axis H-H'.

As illustrated in figure 2 to 6, the plurality of hinging axes H-H' intersect to define a pivot axis P-P'. As this will be presented in more details later on, and for example, each hinging member 34 defines hinging axes H-H' of the plurality of hinging axes H-H', such hinging axes H-H' defined by a hinging member intersecting for example at an articulation vertex S of the hinging member 34. The pivot axis P-P' is then intersecting such articulation vertex S. One understands that such a pivot axis P-P' can be referred to as virtual pivot axis since the rotation around the pivot axis P-P' results from rotations around the hinging axes H-H'.

As visible from figures 2 to 6, the pivot axis P-P' is offset to the hinging device 28.

For example, as illustrated in figures 2 to 6, the pivot axis P-P' extends outside the internal volume V.

As visible from figure 2, the hinging device 28 defines for example a lever arm L between the pivot axis P-P' and the actuator axis A-A'. One understands that the lever arm corresponds to the distance between the pivot axis P-P' and the actuator axis A-A', that is, the smallest distance possible between points from the pivot axis P-P' and the actuator axis A-A'. In a specific configuration, the lever arm L corresponds for example to the distance between the pivot axis P-P' and the second end 32 of the actuation device 26. A ratio of the lever arm L over the effective chord length X is for example comprised between 12% and 50%, and for example between 15% and 30%.

In the above presented example, the ratio of the lever arm L over the effective chord length X depends on the position of the control surface 20 relative to the main portion 18. In other examples non-presented in details here, the lever arm L is defined as the distance between the pivot axis P-P' and the second end 32 of the actuation device 26, independently of the position of the control surface 20 relative to the main portion 18.

The pivot axis is for example substantially parallel to a trailing edge (non-referenced) of the main portion 18 of the aircraft 10.

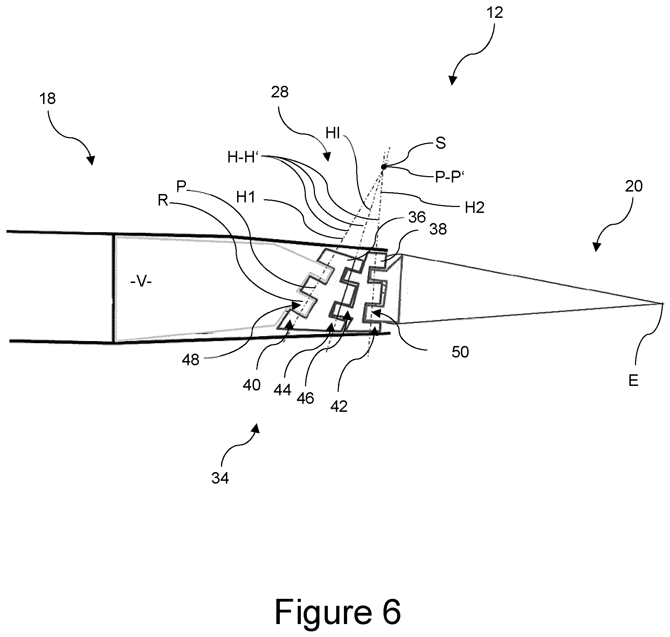

The pivot axis P-P' is for example facing an extrados of the control surface 20 and/or main portion 18, that is, is extending above the control surface 20 and/or main portion 18, such as illustrated in the examples of figures 2 to 5. In other examples, the pivot axis P-P' is for example facing an intrados of the control surface 20 and/or main portion 18, that is, is extending under the control surface 20 and/or main portion 18, such as illustrated in the example of figures 6.

The hinging device 28 is configured for guiding the movement of the control surface 20 in rotation around the pivot axis P-P'.

In particular, the hinging device 28, by changing configuration around its hinging axes H-H', guides the control surface 20 in rotation around the pivot axis P-P' relative to the main portion 18 of the aircraft.

As visible from figures 3 and 4, when the actuation system comprises a plurality of hinging devices 28, each hinging device 28 of said plurality of hinging devices 28 is configured for guiding the movement of the control surface 20 in rotation around a same pivot axis P-P'.

In particular, and for example, the pivot axis P-P' is defined by the articulation vertexes S of the or each hinging member(s) 34 of each hinging devices 28. The pivot axis P-P' is then for example the axis intersecting the articulation vertexes S of the or each hinging member(s) 34 of each hinging devices 28.

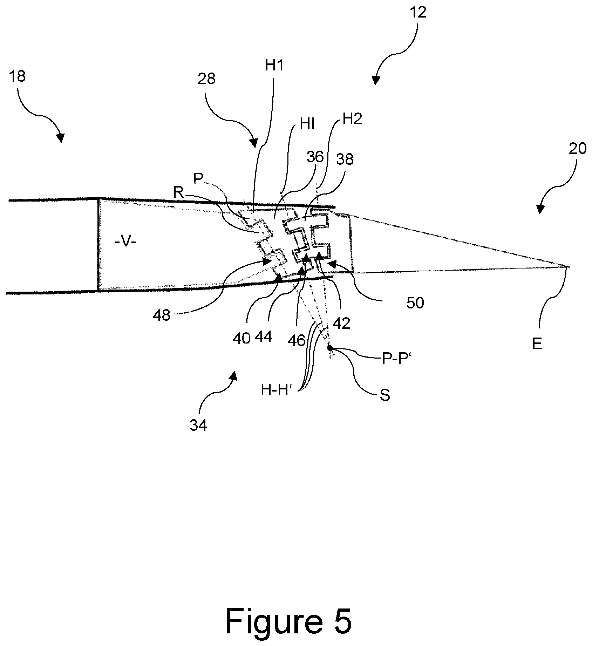

The hinging members 34 of the actuation systems 22 illustrated in figures 5 and 6 will now be presented in more details. This example is differing from the generic hinging member 34 presented above only by the following elements.

Each hinging member 34 comprises a first hinging element 36 and a second hinging element 38.

As illustrated from figures 5 and 6, the first hinging element 36 is defining a first hinging axis H1 and is articulated to the main portion 18 of the aircraft 10 around the first hinging axis H1.

The second hinging element 38 is for example defining a second hinging axis H2 and is articulated to the control surface 20 around the second hinging axis H2.

As illustrated from figures 5 and 6, the first 36 and second 38 hinging elements are for example defining together an intermediate hinging axis HI and are articulated around the intermediate hinging axis HI.

As presented above, and as visible in the example presented in figures 5 and 6, the first hinging axis H1, the second hinging axis H2 and the intermediate hinging axis HI are intersecting at an articulation vertex S. The first hinging axis H1, the second hinging axis H2 and the intermediate hinging axis HI are then defining the pivot axis P-P', which intersects each of the first hinging axis H1, the second hinging axis H2 and the intermediate hinging axis HI at the articulation vertex S.

The first hinging axis H1, the second hinging axis H2 and the intermediate hinging axis HI are for example, and in other words, defining a pyramid shape.

This first hinging axis H1 and the second hinging axis H2 are for example substantially perpendicular to the pivot axis P-P'. In an example, the intermediate hinging axis HI is also perpendicular to the pivot axis when the actuator 26 is actuated such that its first 30 and second 32 ends are moved to an extreme position where they are the furthest away from each other. In such an extreme configuration, the first hinging axis H1, the second hinging axis H2 and the intermediate hinging axis HI are for example extending in a same plane which is perpendicular to the pivot axis P-P'.

As illustrated from figures 5 and 6, the first hinging element 36 comprises a first crenelated portion 40 and/or the second hinging element 38 comprises a second crenelated portion 42. Furthermore, or in alternative, the first hinging element 36 comprises an intermediate crenelated portion 44 and the second hinging 38 element comprises an intermediate crenelated portion 46.

In the examples presented in figures 5 and 6, the main portion 18 of the aircraft 10 comprises a crenelated portion 48, said crenelated portion 48 being complementary to the first crenelated portion 40 of the first hinging element 36. The first crenelated portion 40 of the first hinging element 36 is then for example nested into such a complementary crenelated portion 48.

In particular, the first crenelated portion 40 and the complementary crenelated portion 48 of the main portion 18 both comprise alternating protrusions P and recesses R, the protrusions of one of the first crenelated portion 40 and complementary crenelated portion 48 of the main portion 18 being arranged in the recesses of the other of the first crenelated portion 40 and complementary crenelated portion 48.

In the examples presented in figures 5 and 6, the control surface 20 of the aircraft 10 comprises a crenelated portion 50, said crenelated portion 50 being complementary to crenelated portion of the second hinging element 38. The second crenelated portion 42 is then for example nested into such a complementary crenelated portion 50.

In particular, the second crenelated portion 42 and the complementary crenelated portion 50 of the control surface 18 both comprise alternating protrusions P and recesses R, the protrusions of one of the second crenelated portion 42 and complementary crenelated portion 50 of the control surface 20 being arranged in the recesses of the other of the second crenelated portion 42 and complementary crenelated portion 50.

In the example presented in figures 5 and 6, the intermediate crenelated portion 44 of the first hinging element 36 and the intermediate crenelated portion 46 of the second hinging element 38 are nested into each other.

In particular, the intermediate crenelated portion 44 of the first hinging element 36 and the intermediate crenelated portion 46 of the second hinging element 38 both comprise alternating protrusions P and recesses R, the protrusions of one of the intermediate crenelated portion 44 of the first hinging element 36 and the intermediate crenelated portion 46 of the second hinging element 38 being arranged in the recesses of the other of the intermediate crenelated portion 44 of the first hinging element 36 and the intermediate crenelated portion 46 of the second hinging element 38.

For example, each of the first crenelated portion 40, of the second crenelated portion 42, the intermediate crenelated portion 44 of the first hinging element 36, the intermediate crenelated portion 46 of the second hinging element 38, the complementary crenelated portion 48 of the main portion 18 and the complementary crenelated portion 50 of the control surface 20, comprises between one and five, and for example between two and four, protrusions P and/or recesses R.

As illustrated in figures 5 and 6, the first hinging axis H1 passes for example through the first crenelated portion 40. For example, the first hinging axis H1 passes through the first crenelated portion 40 and through the complementary crenelated portion 48 of the main portion 18, that is for example through the protrusions P of the first crenelated portion 40 and of the complementary crenelated portion 48 of the main portion 18.

The hinging device 28 comprises for example a first pin (non-illustrated) connecting the first hinging element 36 to the main portion 18 so that the first hinging element 36 is articulated relative to the main portion 18 of the aircraft 10 around the first hinging axis H1. For example, the hinging device 28 further comprises bushings (non-illustrated) arranged between the main portion 18 and/or the first hinging element 36 and/or the first pin.

As illustrated in figures 5 and 6, the second hinging axis H2 passes for example through the second crenelated portion 42. For example, the second hinging axis H2 passes through the second crenelated portion 42 and through the complementary crenelated portion 50 of the control surface 20, that is for example through the protrusions P of second crenelated portion 42 and of the complementary crenelated portion 50 of the control surface 20.

The hinging device 28 comprises for example a second pin (non-illustrated) connecting the second hinging element 38 to the control surface 20 so that the second hinging element 38 is articulated relative to the control surface 20 around the second hinging axis H2. For example, the hinging device 28 further comprises bushings (non-illustrated) arranged between the control surfaces 18 and/or the second hinging element 38 and/or the second pin.

As illustrated in figures 5 and 6, the intermediate hinging axis HI passes for example through the intermediate crenelated portion 44 of the first hinging element 36, also referred to as the first intermediate crenelated portion 44, and through the intermediate crenelated portion 46 of the second hinging element 38, also referred to as the second intermediate crenelated portion 46.

The hinging device 28 comprises for example an intermediate pin (non-illustrated) connecting the first hinging element 36 to the second hinging element 38 so that the first hinging element 36 is articulated relative to the second hinging element 38 around the intermediate hinging axis HI. For example, the hinging device 28 further comprises bushings (non-illustrated) arranged between the first hinging element 36 and/or the second hinging element 38 and/or the intermediate pin.

The hinging members 34 of the actuation systems 22 illustrated in figures 3 and 4 will now be presented in more details. The hinging members 34 of these examples differs from the hinging members 34 presented in figures 5 and 6 above only by the following elements.

In the examples presented in figures 3 and 4, the hinging member 34 comprises a flexure hinge 52.

In particular, in the example of figure 3, each hinging device 28 comprises one hinging member 34 comprising a flexure hinge 52. In the example of figure 4, each hinging device 28 comprises two hinging members 34, each hinging members comprising a flexure hinge 52.

In further non-illustrated examples, each hinging device 28 comprises more than two hinging members 34, each hinging member 34 members comprising a flexure hinge 52. For example, each hinging members 34 comprises a plurality of flexure hinges 52 which are stacked to form the hinging member 34.

The flexure hinge 52 is configured to bend between the main portion 18 of the aircraft 10 and the control surface. In particular, as visible in the schematic illustrations of figures 3 and 4, the flexure hinge 52 is configured to bend to define at least one hinging axis H-H' of the plurality of hinging axes H-H'.

For example, as presented in figures 3 and 4, the flexure hinge 52 comprises predetermined bending regions (not referenced) such that the flexure hinge 52 bends to define at least one hinging axis H-H' of the plurality of hinging axes H-H'. In particular, the flexure hinge 52 presented in figures 3 and 4 comprises three bending regions such that the flexure hinge 52 defines three hinging axes H-H'. The flexure hinge is then for example bendable into a truncated pyramid shape.

In other examples, the flexure hinge 52 defines an infinity of hinging axes H-H'. In such an example, the flexure hinge 52 is for example bendable into a frusto-conical shape.

In the exampled presented in figures 3 and 4, the flexure hinge 52 has a substantially trapezoidal shape. One understand that such trapezoidal shape can be bent into a pyramid or frusto-conical shape as presented above.

As understood from figures 3 and 4, the trapezoidal shape of the flexure hinge comprises for example a first leg 54 and a second leg 56, opposed to the first leg 54. The first 54 and second 56 legs are for example connected by two bases 58 of the trapezoidal shape.

The edge defined by the first leg 54 is for example connected to the main portion 18 of the aircraft 10 and the edge defined by the second leg 56 is for example connected to the control surface 20.

An actuation method 100 for moving a control surface 20 relative to a main portion 18 of an aircraft 10 and being implemented by an actuation system 22 as described above will now be presented.

In an actuating step 110, the actuation device 26 of the actuation system 22 is moving its first 30 and second ends 32 along the actuator axis A-A'.

In a guiding step 120, the movement of the control surface 20 is guided relative to the main portion 18 by the hinging device 28 of the actuation system 22. The hinging device 28 is guiding the movement of the control surface 20 in rotation around the pivot axis P-P' of the actuation system 22.

In particular, and as presented above, the hinging device 26 is deformed/reconfigured around its hinging axes H-H' such that the control surface 20 is rotated around the pivot axis P-P' of the actuation system 22.

As seen above, the use of a hinging device 28 configured for guiding the movement of the control surface 20 in rotation around a pivot axis P-P' being offset of the hinging device 28 is especially relevant to have a limited footprint of the actuation system 22 while allowing the actuation system 22 to properly and safely actuate the control surface 20.

Using a first 36 and a second 38 hinging elements is especially relevant to ensure an accurate guiding of the control surface 20 and also ensures a reliable actuation.

Having first 36 and second 38 hinging elements comprising crenelated portions 40, 42, 44, 46 nested into each other and/or nested into complementary crenelated portions 48, 50 is especially advantageous to further ensure a robust and reliable guiding of the control surface 20 relative to the main portion 18.

The use of a flexure hinge 52 and for example the specific shape of the flexure hinge 52 are further especially advantageous for simplifying the hinging member while allowing to accurately define the guiding of the control surface 20 relative to the main portion 18.

Having a hinging device 28 comprising a plurality of hinging members 34 allows ensuring simple hinging members 34 while offering a sufficient reliability for the hinging device 28.

An actuation device 26 which ends 30, 32 are configured to be moveable in rotation relatively to the main portion 18 and the control surface 20 ensure a proper actuation of the control surface 20 along its whole trajectory when it is guided by the hinging device 28.

An actuation system 22 comprising a plurality of hinging devices 28 configured for guiding the movement of the control surface 20 in rotation around a same pivot axis P-P' is especially advantageous to further improve the robustness and the accuracy of the guiding with simple devices.

Having a pivot axis P-P' extending outside the internal volume V is allowed by the above described actuation system and is especially advantageous since this allows having a long lever arm for the actuation of the control surface 20 by the actuation device 26, which in turns ensures reliable actuation but also allows dimensioning the actuation device 26 based on such a long lever arm, leading to a lightweight actuation device 26.

The rotation angle range comprised between +25° and -25° is especially advantageous for having an aerodynamically effective control surfaces 20.

The sealing elements 24 are especially advantageous to ensure good aerodynamic performance of the control surface assembly 12 throughout the actuation of the control surface 20 relative to the main portion 18.

The ratio of the lever arm L over the effective chord length X being comprised between 12% and 50% is particularly advantageous for the actuation device 26 to be able to actuate the moveable surface 20, even if such an actuation device 26 is only configured for providing a limited translational force.

## Claims

1. Actuation system (22) for actuating a control surface (20) of an aircraft (10), comprising:
- an actuation device (26), comprising a first end (30) configured to be connected to a main portion (18) of the aircraft (10) and a second end (32) configured to be connected to the control surface (20) of the aircraft (10), the actuation device (26) being configured for actuating said control surface (20) relative to the main portion (18), and
- at least one hinging device (28), configured to connect the control surface (20) to the main portion (18), the hinging device (28) comprising at least one hinging member (34) and being configured for guiding a movement of the control surface (20) relative to the main portion (18),
wherein the actuation device (26) is a translational actuator configured to move its first (30) and second ends (32) relatively in translation along an actuator axis (A-A'), wherein the hinging device (28) defines a plurality of hinging axes (H-H', H1, H2, H3), the plurality of hinging axes (H-H') intersecting to define a pivot axis (P-P'), the pivot axis (P-P') being offset to the hinging device (28), the hinging device (28) being configured for guiding the movement of the control surface (20) in rotation around the pivot axis (P-P').

2. Actuation system (22) according to claim 1, wherein the hinging member (34) comprises a first hinging element (36) and a second hinging element (38), the first hinging element (36) being configured to be articulated to the main portion (18) around a first hinging axis (H1), the second hinging (38) element being configured to be articulated to the control surface (20) around a second hinging axis (38), the first (36) and second (38) hinging elements being articulated around an intermediate hinging axis (HI).

3. Actuation system (22) according to claim 2, wherein:
- the first hinging element (36) comprises a first crenelated portion (40), configured to be nested into a complementary crenelated portion (48) of the main portion (18); and/or
- the second hinging element (38) comprises a second crenelated portion (42), configured to be nested into a complementary crenelated portion (50) of the control surface (20); and/or
- both the first hinging element (36) and the second hinging element (38) comprise intermediate crenelated connection portions (44, 46), the intermediate crenelated portions (44, 46) of the first (36) and second (38) hinging elements being nested into each other.

4. Actuation system (22) according to claim 3, wherein the first hinging axis (H1) passes through the first crenelated portion (40); and/or
the second hinging axis (H2) passes through the second crenelated portion (42); and/or
the intermediate hinging axis (HI) passes through the intermediate crenelated portions (44, 46) of the first (36) and second (38) hinging elements.

5. Actuation system (22) according to any of the preceding claims, wherein the hinging member (34) comprises a flexure hinge (52), the flexure hinge (52) being configured to bend between the main portion (18) and the control surface (20) to define at least one of the axis of the plurality of hinging axes (H-H').

6. Actuation system (22) according to claim 5, wherein the flexure hinge (52) has a substantially trapezoidal shape, the edge defined by a first leg (54) of said trapezoidal shape being connected to the main portion (18) and the edge defined by a second leg (56) of said trapezoidal shape, being connected to the control surface (20).

7. Actuation system (22) according to any of the preceding claims, wherein the hinging device (28) comprises a plurality of hinging members (34).

8. Actuation system (22) according to any of the preceding claims, wherein the actuation system (22) comprises a plurality of hinging devices (28), each hinging device (28) of said plurality of hinging devices (28) being configured for guiding the movement of the control surface (18) in rotation around a same pivot axis (P-P').

9. Control surface assembly (12) comprising a main portion (18) of an aircraft (10), a control surface (20) of said aircraft (10) and an actuation system (22) according to any of the claims 1 to 8.

10. Control surface assembly (12) according to claim 9, wherein the main portion (18) and the control surface (20) of the aircraft (10) define together an internal volume (V), the pivot axis (P-P') extending outside of the internal volume (V).

11. Control surface assembly (12) according to claim 9 or 10, wherein a rotation angle range of the control surface (20) relative to the main portion (18) is comprised between +25° and -25°, wherein an angle of 0° corresponds to a position wherein the control surface (20) and the main portion (18) are substantially aligned.

12. Control surface assembly (12) according to any of the claims 9 to 11, wherein the control surface assembly (12) comprises at least one sealing element (24) fastened to one of the main portion (18) and control surface (20) and abutting the other of the main portion (18) and control surface (20).

13. Control surface assembly (12) according to claim any of the claims 9 to 12, wherein the control surface (20) defines an effective chord length (X) between the second end (32) of the actuation device (26) and a trailing edge (E) of the control surface (20), the hinging device (28) defining a lever arm (L) between the pivot axis (P-P') and the actuator axis (A-A'), a ratio of the lever arm (L) over the effective chord length (X) being comprised between 12% and 50%.

14. Aircraft (10) comprising a control surface assembly (12) according to any of the claims 9 to 13.

15. Actuation method (100) for moving a control surface (20) relative to a main portion (18) of an aircraft (10), the actuation method (100) being implemented by an actuation system (22) according to any of the claims 1 to 8, wherein the actuation method (100) comprises the following steps:
- actuating (110) the actuation device (26) of the actuation system (22) to move the first (30) and second (32) ends of the actuation device (26) along the actuator axis (A-A'); and
- guiding (120) the movement of the control surface (20) relative to the main portion (18) by the at least one hinging device (28) of the actuation system, the hinging device (28) guiding the movement of the control surface (20) in rotation around the pivot axis (P-P') of the actuation system (22).
